# EUROPEAN PATENT SPECIFICATION

(11) **EP 0 665 128 B1**
(45) Date of publication and mention of the grant of the patent: **17.06.1998**
(21) Application number: 95300409.0
(22) Date of filing: 24.01.1995
(51) Int. Cl.: B60B 19/04

(54) **Variable outer diameter wheel and vehicle providing it**
Rad mit veränderlichem Aussendurchmesser und Fahrzeug versehen damit
Roue à diamètre extérieur variable et véhicule pourvu d'une telle roue

(30) Priority: 28.01.1994 JP 8250/94; 12.05.1994 JP 98514/94
(43) Date of publication of application: 02.08.1995
(73) Proprietor: MATSUSHITA ELECTRIC INDUSTRIAL CO., LTD., Kadoma-shi Osaka (JP)
(72) Inventor: Matsuda, Yutaka, Toyonaka-shi, Osaka, 560 (JP); Shimizu, Kaoru, Osaka, 535 (JP)
(74) Representative: Crawford, Andrew Birkby

(56) References cited:
- FR-A- 2 700 143
- GB-A- 1 018 547
- GB-A- 2 118 496
- US-A- 3 802 743

## Description

### BACKGROUND OF THE INVENTION

### FIELD OF THE INVENTION

The present invention relates to a variable outer diameter wheel in which the outer diameter of the wheel varies and relates to a vehicle providing the variable outer diameter wheels.

### DESCRIPTION OF THE PRIOR ART

For vehicles such as usual automobiles and motor bicycles with engines working with combustible or bicycles without engines, countermeasure for preventing slip and skid accident against frozen roads and snow-clad roads is taken by using spiked tires or chained tires.

For farming vehicles and wheel chairs, variable outer diameter wheels are used to make running easy independent of road surface condition.

In electric automobiles, it is studied to make the outer diameter of the wheel large as one of speed varying means in order to increase running efficiency.

As a variable outer diameter using fluid such as compressed air, Japanese Patent Laid Open 55-156706 in which tires are expanded and Japanese Utility Model 55-25551 in which a certain link mechanism and means which going-in/out of a link is free by a tapered cam are proposed.

Further, as a variable outer diameter roller using fluid such as compressed air, for example, in Japanese Patent Laid Open 3-20420 and Japanese Patent Laid Open 3-259843, in which a roller is proposed which by supplying fluid (for example, air) into a tubular and elastic pressure chamber (including a combination of a plurality of pressure chambers) fixed to a rotary axis, the tubular elastic body is expanded and the roller outer diameter is enlarged.

However, because spiked tires being mine dust pollution, they are undesirable for preserving good environment. In the case of chained tires, it is troublesome to attach or detach.

A variable outer diameter wheel in Japanese Utility Model 55-25551 uses link mechanism and a tapered cam and its composition is complex with a number of parts. Accordingly, it takes much assemble hour and comes expensive.

In a construction in which tires or rollers are expanded by supplying fluid, if the variation ratio of the outer diameter of tires or tubular elastics between at expansion and at normal state is big and for example, expansion with variation ratio over 50% is repeated, fatigue breakdown due to tension occurs with high possibility, even if they are soft elastics like rubber.

Supporting a vehicle body with heavy load high pressure fluid, for example compressed air of about 5 kgf/cm² is used.

In this case, in tubular elastics in the present art, the variation quantity and tension in a peripheral direction at expansion become remarkably big.

In a construction in which elastic material such as rubber is expanded, the construction and the number of fatigue resistance times are restricted and it is very difficult to use them.

To solve the above problems, a variable outer diameter wheel in accordance with the present invention has a construction that a plurality of sliders set radially are moved by pressure of supplied fluid such as air and oil and the outer diameter of the wheel enlarges.

A vehicle has a construction providing with the variable outer diameter wheels in which the outer diameters are varied by the supplied fluid.

According to the present invention there is provided a variable outer diameter wheel comprising:
a supporting part having a fluid supplying hollow and a plurality of penetrating holes radially on the side walls of said supporting part and connecting to said fluid supplying hollow; and
the same number of sliders as said penetrating holes which fit said penetrating holes to be able to slide in said penetrating holes and form wheel peripheral parts; and
   wherein said sliders are arranged to be moved being pushed by the fluid supplied into said fluid supplying hollow in the direction that the outer diameter of said variable outer diameter wheel enlarges:

Certain embodiments of the present invention, parts of the wheel corresponding to spike function of a spiked tire or friction function of a chained tire are thrusted against frozen roads and snow-clad roads.

Against usual roads except frozen roads and snow-clad roads, the outer diameter of the wheel can increase by attaching rubber parts or plastic parts corresponding to a tire on the cylindrical face (outer peripheral face) made of material with the above-mentioned spike or friction function.

Describing in detail, the variable outer diameter wheel has a construction that a sealing part having pot-shaped elastic diaphragms against a plurality of penetrating holes made on the cylindrical wall of a pipe is tightly fitted to side plates, each slider forming wheel peripheral face is fitted to each penetrating hole so that the sliders can slide in the holes, the sealing part and the pipe are air-tightly put between the axle having a hollow for supplying fluid which pushes the diaphragms and the side plates being put on both sides of the sealing part and the pipe, and the sliders are pushed and moved in a direction that the outer diameter of the wheel is enlarged by fluid (for example, compressed air) supplied form a rotary coupling connected to the axle through the diaphragms.

The pot-shaped diaphragms attached inside the tightly closed pipe are deformed into a plate by the fluid supplied from a fluid supplying hollow of the hollow axle. At the same time, the sliders which penetrate the holes on the cylindrical wall of the pipe and are inserted in the pot parts of the diaphragms are pushed out of the pipe. As a result, arc parts which locate on the tops of the sliders attached radially and form a wheel peripheral face are pushed outside by a designated distance and the wheel becomes to have a desired outer diameter.

The side plates restrict a moving range (upper dead point) of the sliders.

On the cylindrical wall (peripheral wall) of the side plates, either a rubber tire or a tire containing a rubber tube keeping designated pressured fluid is attached.

In the variable outer diameter wheel, the compressed air in the pipe is exhausted on usual roads at speed reduction state or at running state and the sliders are pushed back to the original positions in the diaphragms of the sealing part by ring-shaped coil springs or rubber rings provided in the grooves on the wheel peripheral parts. As a result, the arc parts on the tops of the sliders form a wheel with original small outer diameter.

### BRIEF DESCRIPTION OF THE DRAWINGS

FIG.1 is a side view of a vehicle providing variable outer diameter wheels in accordance with an exemplary embodiment of the present invention.

FIG.2 is a cross sectional view of a variable outer diameter wheel composing a vehicle shown in FIG.1.

FIG.3 is a cross sectional view of a variable outer diameter wheel shown in FIG.2 viewed from the direction of the cut line S1-S1.

FIG.4 is a cross sectional view of a variable outer diameter wheel shown in FIG.2, in the state which compressed air is supplied.

FIG.5 is a cross sectional view of a variable outer diameter wheel shown in FIG.4 viewed from the direction of the cut line S2-S2.

FIG.6 is a cross sectional view of a sealing part included in a variable outer diameter wheel shown in FIG.2.

FIG.7 is a floor plan of a sealing part shown in FIG.6.

FIG.8 is a front view of a slider included in a variable outer diameter wheel shown in FIG.2.

FIG.9 is a floor plan of a slider included in a variable outer diameter wheel shown in FIG.2.

FIG.10 is a cross sectional view of another variable outer diameter wheel composing a vehicle shown in FIG.1, cut along the axis of the axle.

FIG.11 is a cross sectional view of still another variable outer diameter wheel composing a vehicle shown in FIG.1, cut along the axis of the axle.

FIG.12 is a cross sectional view of the variable outer diameter wheel shown in FIG.11 viewed from the direction of the cut line S3-S3.

FIG.13 is a front view of a slider included in a variable outer diameter wheel shown in FIG.11.

FIG.14 is a plan of a slider included in a variable outer diameter wheel shown in FIG.11.

### DESCRIPTION OF THE EXEMPLARY EMBODIMENTS

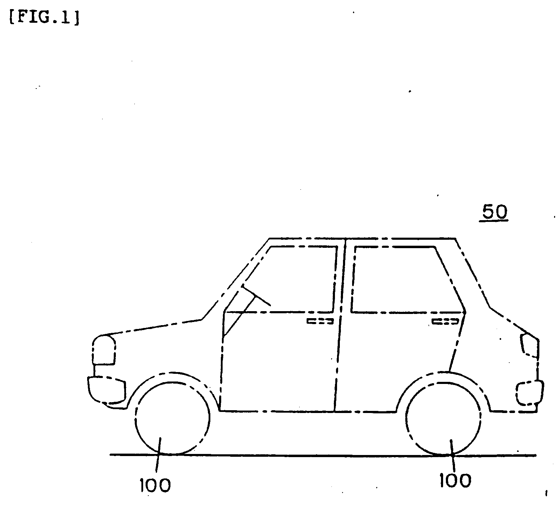

FIG.1 is a side view of a vehicle providing variable outer diameter wheels in accordance with an exemplary embodiment of the present invention. The vehicle 50 forming a four wheeled automobile provides with variable outer diameter wheels 100 near the four corners of the bottom of the vehicle body through ball bearings or bearings made out of, for example cylindrical metal so that the wheels can rotate.

The rotation of the variable outer diameter wheel 100 is drived by usual means which has been used so far. Rotation power is transferred by means of an engine working with combustible such as gasoline, alcohol, hydrogen gas, natural gas etc. or means by a battery driven motor, a gear coupling and an axle. (All is not shown in the drawings.)

Each variable outer diameter wheel 100 is supplied with compressed air from an air supplying source, for example an air pump through a valve and a rotary air coupling 17. In the example shown in FIG.1, the four variable outer diameter wheels 100 are connected each other by a tube and the compressed air is supplied from the pipe (not shown in FIG.1). Oil can be used instead of air. Instead of one pipe for the variable outer diameter wheels, independent four pipes can be connected to the air pump.

Also as an air supplying source, a power compressor attached to the vehicle in one unit can be used or a usual power compressor, a pump or a manual air pump (like a bicycle pump) can be used.

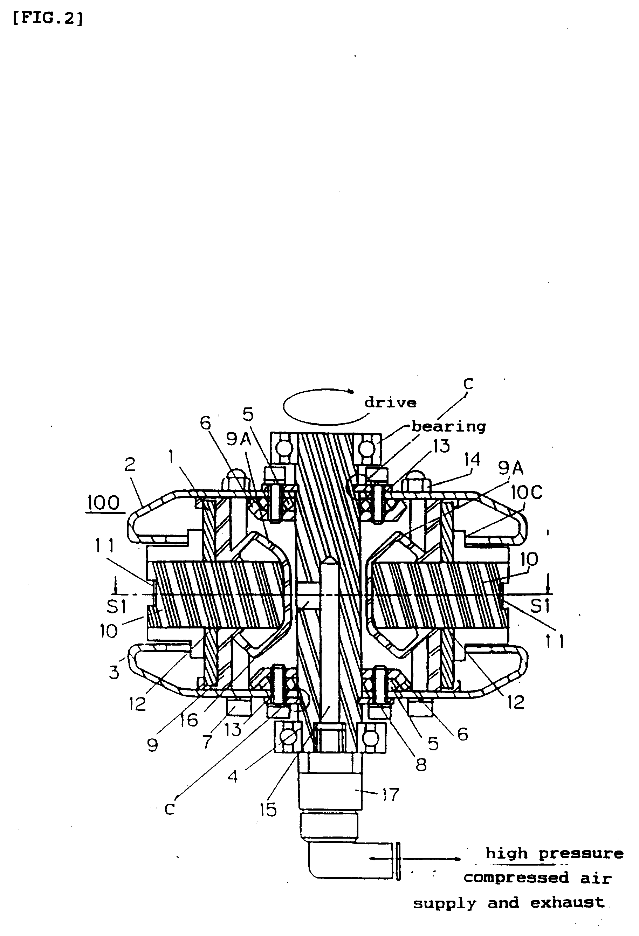

FIGs.2 to 9 show drawings of a variable outer diameter wheel 100 in accordance with an exemplary embodiment of the present invention. The cylindrical wall of a pipe 1 has a plurality of penetrating holes, for example four penetrating holes at every 90 degrees. The pipe 1 is made of metal or hard material such as epoxy resin or fiber reinforced plastic (FRP) and is formed by continuous working of metal pipe by a numerical controlled lathe or injection molding of the resin.

The pipe 1 is caught between side plates 2 and 3 from both sides through the rim portion of a sealing part 9. The edge portions of the side plates 2 and 3 are bent so that their cross sectional shape are like an alphabetical letter C as shown in FIG.2. The side plates 2 and 3 are usually made of metal plate and formed by press work but they can be made of also resin such as FRP.

An axle 4 located on the axis of the pipe 1. The side plates 2 and 3 are air tightly strangled by bolts 8 through disc-shaped rubber packings 5 and disc-shaped packing holders 6. Rectangular anti-rotation plates 13 are put into the H-cut grooves (the portion which cross-section is nearly ellipse-shape but not shown in the drawing), perpendicularly to the paper in FIG.2, at total four positions (each two positions at upper and lower parts of the axle) as indicated by mark C and fixed to the side plates 2 and 3 together with the disc-shaped packing holders 6 by the bolts 8.

A part of the disc-shaped rubber packing 5 protrudes in the direction to push the axle 4 from its peripheral according to strangling strength of the bolts 8 and it makes sealing function. Accordingly, it is unnecessary to make surface finishing of the axle 4 and sufficient sealing is kept even at rough surface of steel drawing as it is.

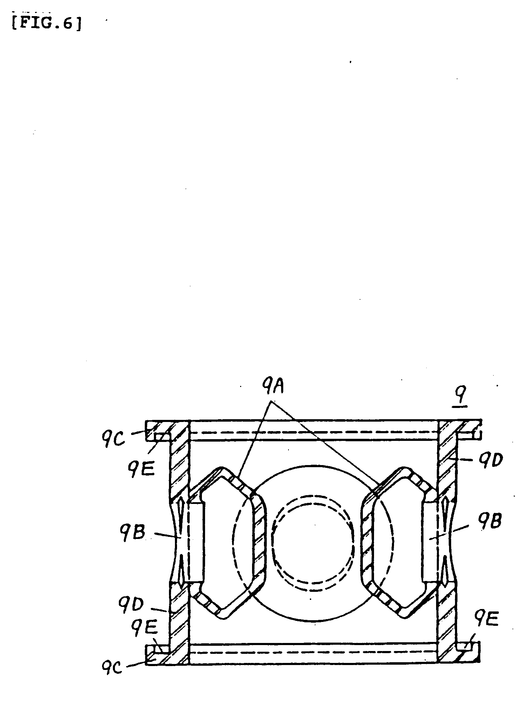

The side plates 2 nad 3 and the pipe 1 are air tightly and perfectly strangled by the bolts 7 and the nuts 14 through the rim portions 9C (upper and lower, in FIG.6) of the sealing part 9.

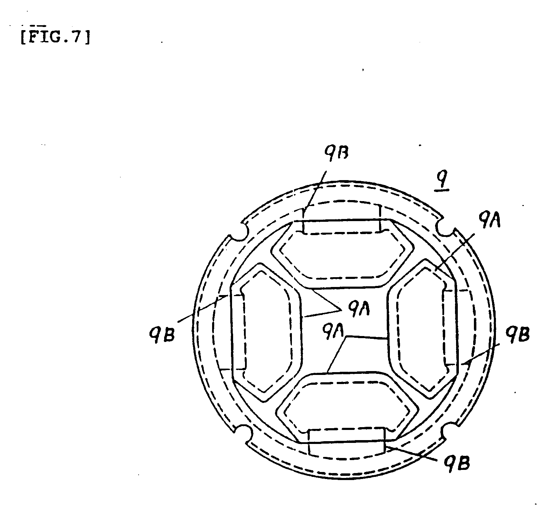

The sealing part 9 is formed by molding elastic material such as silicone rubber, rubber material such as butyl rubber or soft plastic in one unit as shown in FIGs.6 and 7. Molding in one unit is made for example by casting or injection molding.

The sealing part 9 is tightly fitted into the pipe 1. The sealing part 9 is composed of a cylindrical trunk 9D, penetrating holes 9B, diaphragms 9A, rim portions 9C and circular grooves 9E as shown in FIGs.6 and 7.

The penetrating holes 9B are provided at four positions facing to the penetrating holes 12 provided on the cylindrical wall of the pipe 1 and supporting shafts 10A of sliders 10 are fitted into the penetrating holes 9B so that the supporting shafts 10A can slide smoothly through the penetrating holes 9B. The diaphragms 9A form a pot-shape thrusting inside the cylindrical trunk 9D.

The circular grooves 9E and the sword guard-shaped rim portions 9C at the edge of the pipe 1 make possible tight sealing among the side plate 2, the pipe 1 and the side plate 3 by strangling with the bolts 7 and the nuts 14. Here, the shape of the diaphragms 9A of the sealing part 9 can be a bellows, a polyhedron or any other shapes.

The penetrating holes 12 on the cylindrical wall of the pipe 1 to which the supporting shafts 10A of the sliders 10 smoothly and tightly fix are tightly closed by the diaphragms 9A of the sealing part 9 as shown in FIG.2.

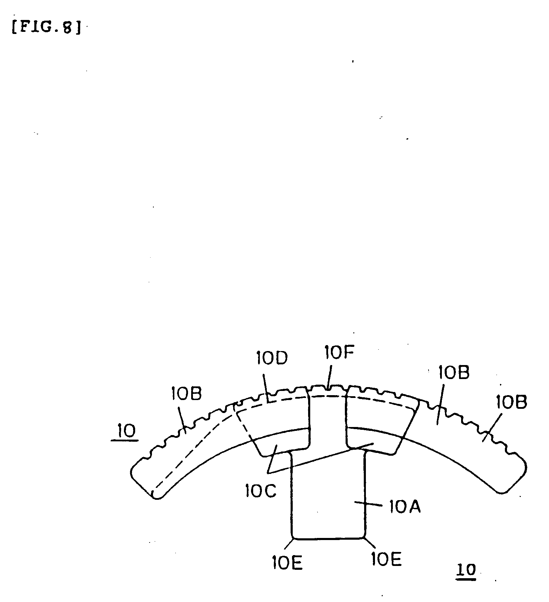

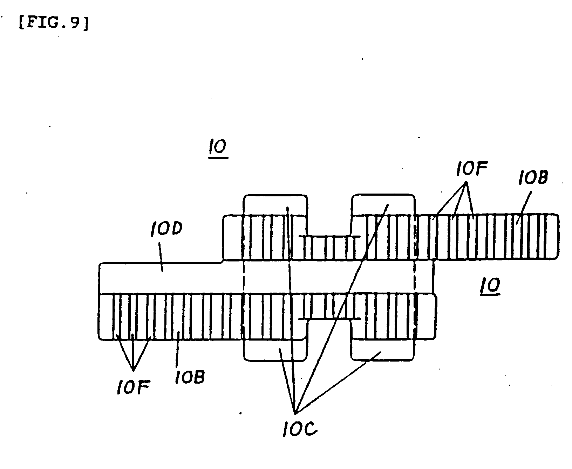

A front view and a floor plan of the sliders 10 are shown in FIGs.8 and 9, respectively. The sliders 10 are point-symmetrically provided so that gutters 10D are put between the arc-shaped wheel peripheral parts 10B. The arc-shaped wheel peripheral parts 10B are at an end of the supporting shaft 10A and form a wheel peripheral face. The sliders 10 are molded in a desired shape with resin such as FRB. They may be made by, for example cutting metal, die casting or injection molding.

The grooves 10F are provided at every designated space to increases friction at contacting the earth and to prevent slip on a frozen road or a snow-clad road. A plurality of protruding parts such as spike pins may be buried in lattice through plastic or rubber instead of the grooves 10F on the wheel peripheral part 10B and spiked tires are formed.

Rubber lining, plastics or rubber may be attached on the wheel peripheral part 10B to increase friction or to absorb shock and vibration at running on the earth.

The sliders 10 are point-symmetrically provided so that gutters 10D are put between the arc-shaped wheel peripheral parts 10B which are at an end of the supporting shafts 10A and form a wheel peripheral face. By providing the arc-shaped wheel peripheral parts point-symmetrically with designated deviation, the sliders radially allocated at four positions at every 90 degrees can prevent mutual interference of the arc-shaped wheel peripheral parts and form wheel peripheral parts which are contunuous also when the wheel outer diameter enlarges. The shape of the locations of the wheel peripheral parts 10B is not restricted to point symmetry and they may be located like an alphabetical letter Y or S so that they come to be continuous.

Rubber rings 11 are attached in the gutters 10D of the sliders 10. The rubber rings 11 has a function to push the sliders 10 (four pieces in the exemplary embodiment shown in FIG.2) simultaneously towards the axis of the axle 4 and to restore to the original positions having a small wheel diameter. As for the function to restore the sliders 10 to the original positions, means to give negative pressure to diaphragms 9A, ring-shaped tension coil springs connecting their starting point and ending point or any other means may be used instead of the rubber rings 11.

Compressed air is supplied to the cylindrical trunk 9D of the sealing part 9 by a designated timing signal through a rotary air coupling 17, a blind hole 15 on the axis of the axle 4 and a connecting hole 16.

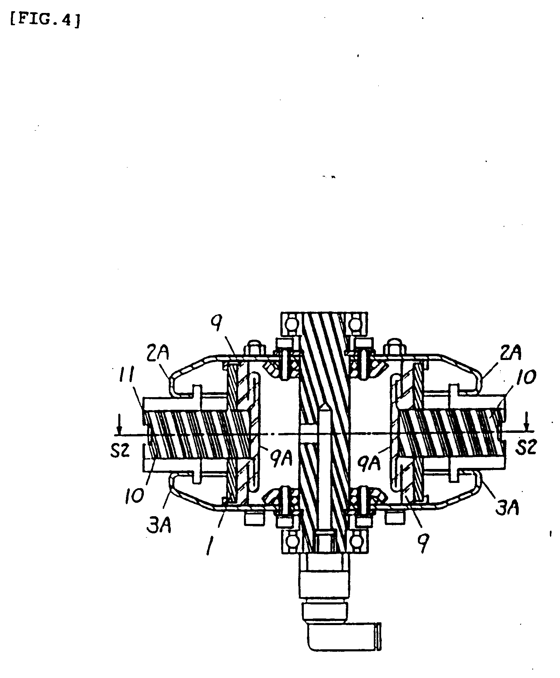

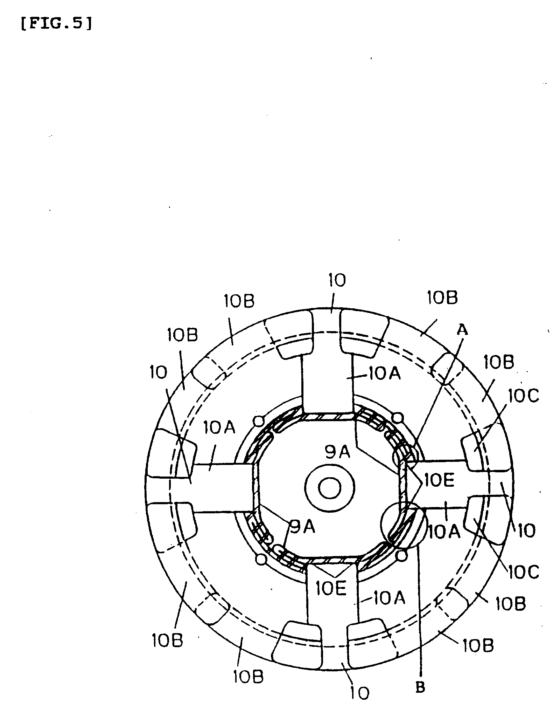

The diaphragms 9A of the sealing part 9 shown in FIG.4 and marked by B in FIG.5 are pushed by the compressed air, deform from a pot-shape to a flat plate-shape and push out the sliders 10 outside the pipe 1.

The stroke end of the sliders 10 pushed by the compressed air is a working limit (upper dead point) of the sliders 10 where the protruding parts 10C of the sliders 10 strike against the C-shaped (hook-shaped) rim portions 2A and 3A of the side plates 2 and 3, respectively.

The wheel peripheral parts 10B of the sliders 10 pushed outside the pipe 1 form a peripheral face having a desired and bigger outer diameter as shown in FIGs.4 and 5. At the same time, they expand the rubber ring 11 fixed in the gutters 10D of the sliders 10.

The pressure resistance of usual cylindrical elastics made of rubber is usually about 2 kgf/cm² and is small.

In the present invention, compressed air of 2 to 5 kgf/cm² is supplied to the diaphragms 9A to support a vehicle itself, people, load and so on.

In this case, the diaphragms 9A made of soft rubber deform to flat plates and are pushed into sharp edges or into small gaps. Repeating the actions, the soft surface of the diaphragm 9A peals off little by little and at last its pressure resistance strength decreases and the diaphragms 9A come to burst. In order to prevent explosion or crack of the diaphragams 9A repeatedly working under high pressure, the edge parts of the supporting shafts 10A are made with round corner 10E as shown in FIG.8.

Working with the compressed air, the deformed portions of the diaphragms 9A are pushed to the inside wall of the cylindrical trunk 9D of the sealing part 9 and the round corners 10E of the supporting shafts 10A, as shown in the circle A in FIG.5 and the bending distortion of the sealing part 9 is made minimum.

The diaphragms 9A of the present invention could realize a repeating life over 2 million cycles under the air pressure of more than 5kgf/cm² according to the above-mentioned construction.

As already mentioned, when a vehicle runs on a usual road after running on a frozen road or a snow-clad road, the compressed air pushing the diaphragms 9A is exhausted through the compressed air supplying hole of the axle 4.

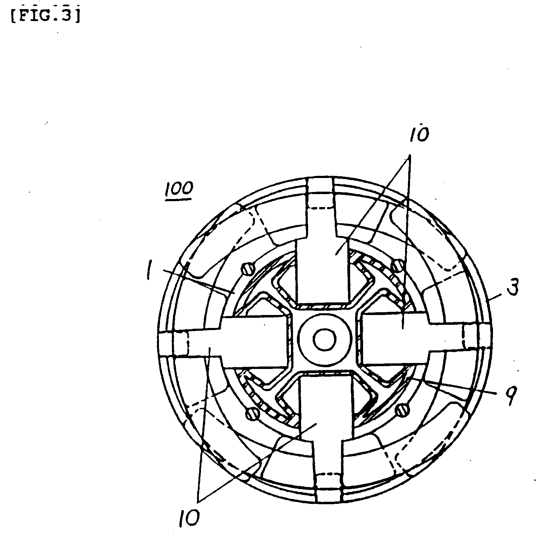

According to the air pressure decrease inside the sealing part 9, the supporting shafts 10A are pushed inside the pipe 1 by the tension of the rubber ring 11, restore to the original state shown in FIGs.2 and 3 and the periphral face (outer diameter) of the wheel peripheral part 10B becomes smaller than the outer diameter of the side plates 2 and 3.

As for a variable outer diameter wheel in which the sliders are radially arranged, any other variation can be used.

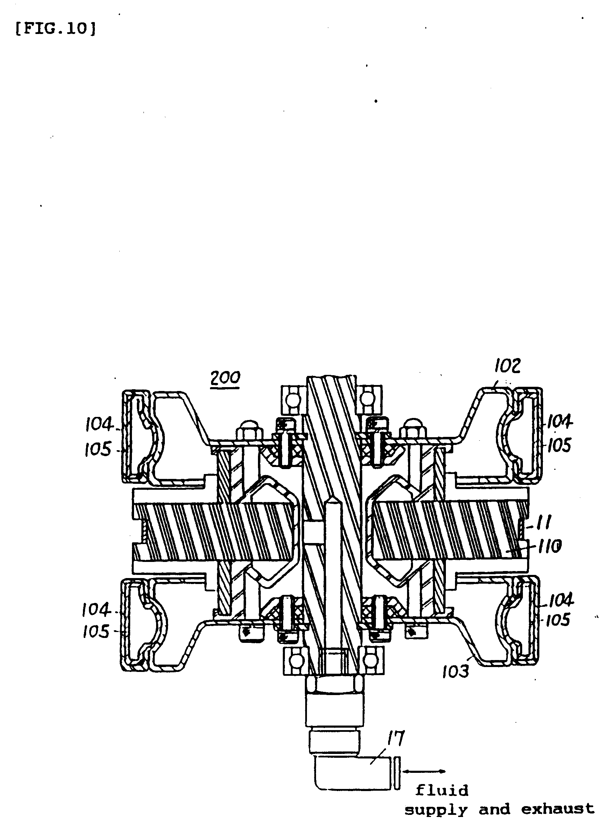

FIG.10 is a cross sectional view of a variation of a variable outer diameter wheel composing a vehicle shown in FIG.1 and a variable outer diameter 200 is principally quite similar to the variable outer diameter 100 shown in FIG.2.

The different points are a shape of the side plates 102 and 103 and a construction that tires 104 containing rubber tubes 104 in them around the peripheral face of these side plates are attached.

The side plates 102 and 103 guide the four pieces of sliders 110 and restrict their moving distance. Further, the peripheral part of the wheel provides concave part similar to that of a usual wheel for attaching an automobile tire. The tires 104 are attached to protect the rubber tubes 105 keeping fluid (usually air) with designated pressure.

As for the shape of side plates 102 and 103 and the shapes of tubes 105 and tires 104, any other shapes can be used similar to those of usual automobiles. A construction attaching only tires and without tubes may be used.

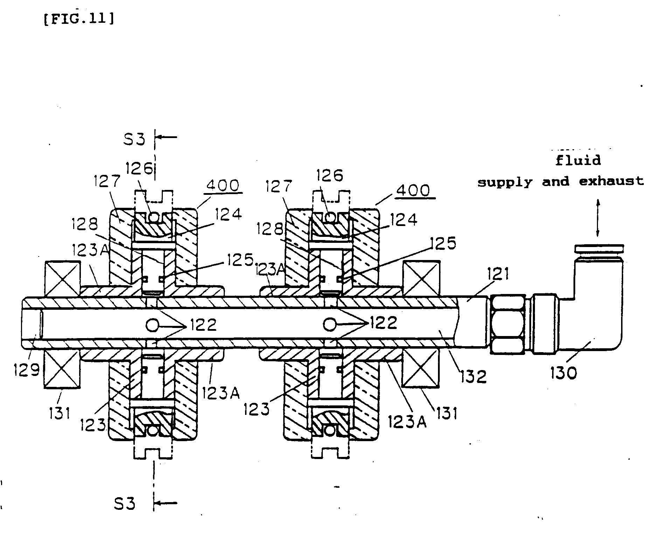

Another exemplary embodiment of a variable outer diameter wheel is shown in FIGs.11, 12, 13 and 14. It includes a supporting part having a fluid supplying hollow on the axis and a plurality of connecting holes radially on the wall of the supporting part and connecting to the fluid supplying hollow and sliders fitting to each penetrating hole to be able to slide in it and form a wheel peripheral face, and has a construction that the sliders are pushed and moved in the direction which the wheel outer diameter increases by the fluid supplied to the fluid supplying hollow.

A variable outer diameter wheel 400 has no sealing part 9, different from the variable outer diameter wheel 100.

In these variable outer diameter wheels 100 and 400, the gap between the sliders and the side plates to which the sliders fit is several ten micrometers wide and is finished in a fitting state of about H7f6 grade. By this finishing work, the outer diameter is made small and the variable outer diameter wheel is made compact.

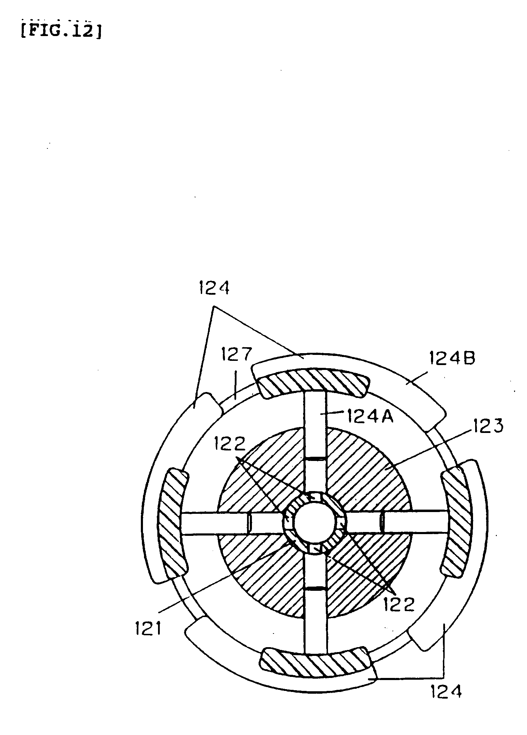

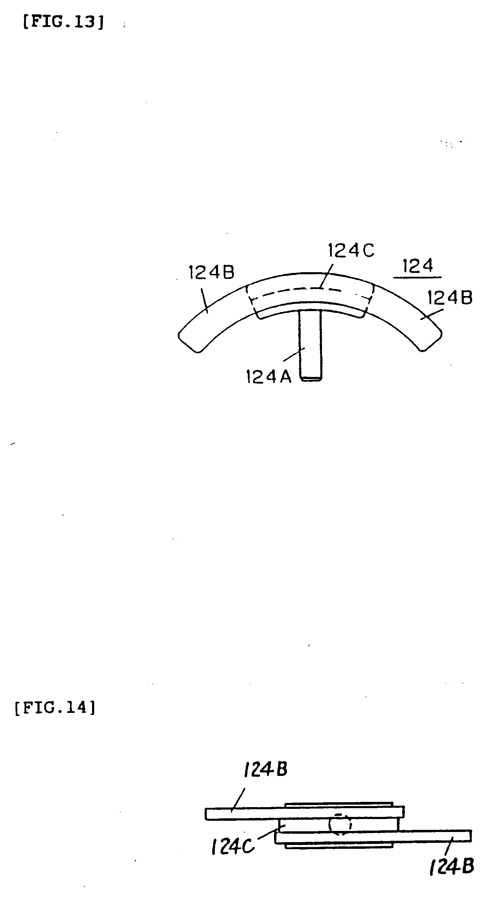

FIG.11 is a cross sectional view of two variable outer diameter wheels 400 attached at two positions on the hollow axle 121. FIG.12 is a cross sectional view in the direction of cross sectional line S3-S3 and shows a state that air is supplied to the hollow axle 121 and the wheel outer diameter enlarges. Here, a ring 125 is omitted to show. FIGs.13 and 14 are a front view and a floor plan of the slider 124, respaectively.

Referring FIG.11, one end of the hollow axle 121 having a axle hollow 132 for supplying fluid (for example air) on the axis of the hollow axle 121 is closed by a plug 129 and a rotary air coupling 130 is attached to another end of the hollow axle 121 and air with designated pressure is supplied to the axle hollow 132.

The hollow axle 121 is supported by the bearings 131 provided at the both ends of the hollow axle 121 and having a designated span.

In FIG. 11, as a matter of convenience, the span between two variable outer diameter wheels is drawn much smaller than an actual span of a vihicle.

The hollow axle 121 provides four connecting holes 122 on the wall of the hollow axle 121 radially at every 90 degrees for each variable outer diameter wheel 400 and a hollow axle 121 has total eight connecting holes 122.

On the hollow axle 121, the main disk 123 for supporting sliders 124 is attached and fixed. In FIG.11, two main disks 123 are attached on the hollow axle 121. The main disk 123 provides four penetrating holes 128 facing to each connecting holes 122 and each penetrating holes 128 is connected to the axle hollow 132 through each connecting hole 122.

The sliders 124 are fit into each penetrating holes 128 of the main disk 123 so that the sliders 124 can smoothly slide in the penetrating holes 128. In FIG.11, four sliders 124 are fitted for the main disk 123. The slider 124 includes a supporting shaft 124A and a wheel peripheral part 124B, similar to the slider 10. The supporting shaft 124A has a designated clearance (gap) for the penetrating hole 128 and fits to the penetrating hole 128 in a fitting state of about H7f6 grade. One or two rings 125 are attached around the supporting shaft 124A of the slider 124 at one or two positions (in FIG.11, one position) to protect air leak and dust.

The surface of the supporting shaft 124A is finished to a smooth surface near a mirror surface by means of turning lathe work or grinding work. When the slider 124 is made of resin or the like, however, a molding die with improved surface roughness may be used and finishing work for the slider itself may be omitted.

The slider 124 provides two arc-shaped wheel peropheral parts 124B in point symmetry and a gutter 124C is provided between the two wheel peropheral parts 124B as shown in FIG.14. The shape of the wheel peripheral part 124B of the slider 124 is similar to that of the slider 10 and the function and the construction of the tension coil spring 126 is similar to the rubber ring 11. Enlarging of the wheel outer diameter is also similar to that of the variable outer diameter wheel 100 and the explanation is omitted.

In FIG.11, the positions of the sliders 124 indicated by two-dotted broken line show a state that the outer diameters of the wheels are enlarged by air.

Two side plates 127 fixed at both outsides of the main disk 127 restrict the stroke end of the slider 124 and prevent rotation of supporting shaft 124A of the slider 124.

When air with designated pressure is supplied in the penetrating hole 128, the side plates 127 ristrict a maximum diameter of the wheel peripheral face which the sliders 124 determine and prevent that the slider 124 falls out from the penetrating hole 128.

Similarly to the variable outer diameter wheel 200 shown in FIG.10, a construction may be used in which either a tire made of rubber or plastic or a tire containing a tube filled with fluid having designated pressure (not shown) is attached outside the cylindrical (peripheral) face of the two side plates 127 forming a variable outer diameter wheel 400 and which has shock absorbing function and safely running function.

Any other construction of a holding part to hold the sliders 124 may be used in a variable outer diameter wheel 400 shown in FIG.11. For example, a holding construction in which a main disk 123 and side plates 127 are made in one unit, a holding construction in which holding is done only by side plates without a main disk 123 or a holding construction in which a main disk 123, side plates 127 and a hollow axle 121 are made in one unit.

Any material such as metal, resin or their composite material may be used for the parts included in the variable outer diameter wheel of the present invention. Any manufacturing means such as die casting, injection molding, press work or cutting work may be used for the parts.

Applying the variable outer diameter wheels to farming vehicles and wheel chairs makes easy running on an irregular road, a weak road or step differences of a staircase as well as attaching them to automobiles with engine or electrical automobiles. Applying them to electrical automobiles makes possible to change speed without speed change mechanism such as gears or fluid and it is possible to improve running efficiency.

A variable outer diameter wheel of the present invention has a very simple construction and does not give an excess tension to the diaphragms. Only a little compression and a small bending distortion occur when the diaphragms deform from a pot-shape to a flat plate-shape. Accordingly, it does not break by fatigue against repeating action over two million cycles and against compressed air of 5kgf/cm².

Because the moving range of the sliders is restricted by the side plates, the maximum wheel outer diameter which the sliders determine is always constant independent of the pressure strength of the fluid supplied to the diaphragms.

Thus, a vehicle having variable outer diameter wheels prevents slip on a frozen or a snow-clad road without giving mine dust pollution. Applying them to farming vehicles and wheel chairs makes easy running independent of the road surface condition. Further, applying them to electric automobiles makes improved running efficiency. Thus, a variable outer diameter wheel having a simple construction and a good repeating fatigue resistance can be presented.

The invention may be embodied in other specific form without departing from the essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A variable outer diameter wheel comprising:
a supporting part (1) having a fluid supplying hollow and a plurality of penetrating holes (12) radially on the side walls of said supporting part and connecting to said fluid supplying hollow; and
the same number of sliders (10) as said penetrating holes (12) which fit said penetrating holes to be able to slide in said penetrating holes and form wheel peripheral parts: and
wherein said sliders (10) are arranged to be pushed by the fluid supplied into said fluid supplying hollow in the direction that the outer diameter of said variable outer diameter wheel enlarges:

2. A variable outer diameter wheel according to claim 1 or claim 2 further comprising either a tire having a rubber tube (105), attached around the cylinder face of said supporting part.

3. A variable outer diameter wheel according to claim 1 further comprising:
diaphragms (9A) facing said penetrating holes;
wherein said sliders (10) are arranged to be moved being pushed by said diaphragms (9A) under the action of said fluid supplied inside said supporting part (1) in the direction that the outer diameter of said variable outer diameter wheel enlarges.

4. A variable outer diameter wheel according to claim 3, further comprising:
sealing parts (9) comprising said diaphragms (9A);
wherein said sealing parts (9) and said pipe (1) are air-tightly combined by putting between side plates (2,3) provided on both edges of said pipe.

5. A variable outer diameter wheel as recited in any preceding claim, wherein said sliders (10) further comprise:
arc-shaped parts (10B) forming said wheel peripheral parts with a designated angle; and
supporting shafts (10A) fitting said penetrating holes (12).

6. A variable outer diameter wheel as recited in any preceding claim wherein either rubber or plastic material is provided on said wheel peripheral parts.

7. A variable outer diameter wheel as recited in claim 5 or 6, wherein said wheel peripheral parts further comprise a spike pin.

8. A vehicle comprising variable outer diameter wheels according to any preceding claim.

## Patentansprüche

1. Rad mit veränderlichem Außendurchmesser, das umfaßt:
ein Aufnahmeteil (1), das mit einem Fluidzufuhrhohlraum und einer Vielzahl von Durchgangslöchern (12) radial an den Seitenwänden des Aufnahmeteils versehen ist, die mit dem Fluidzufuhrhohlraum in Verbindung stehen; und
Gleitkörper (10) in der gleichen Anzahl wie die Durchgangslöcher (12), die in die Durchgangslöcher passen, so daß sie in den Durchgangslöchern gleiten und Radumfangsteile bilden können; und
wobei die Gleitkörper (10) von dem in den Fluidzufuhrhohlraum zugeführten Fluid in der Richtung gedrückt werden, in der der Auflendurchmesser des Rades mit veränderlichem Außendurchmesser zunimmt.

2. Rad mit veränderlichem Außendurchmesser nach Anspruch 1 oder Anspruch 2, das des weiteren einen Reifen mit einem Gummischlauch (105) umfaßt, der um die Zylinderfläche des Aufnahmeteils herum angebracht ist.

3. Rad mit veränderlichem Außendurchmesser nach Anspruch 1, das des weiteren umfaßt:
Bälge (9A), die den Durchgangslöchern zugewandt sind;
wobei die Gleitkörper (10) bewegt werden, indem sie von den Bälgen (9A) unter der Wirkung des im Innern des Aufnahmeteils (1) zugeführten Fluids in der Richtung geschoben werden, in der der Außendurchmesser des Rades mit veränderlichem Außendurchmesser zunimmt.

4. Rad mit veränderlichem Außendurchmesser nach Anspruch 3, das des weiteren umfaßt:
Dichtungsteile (9), die die Bälge (9A) umfassen;
wobei die Dichtungsteile (9) und das Rohr (1) luftdicht verbunden werden, indem sie zwischen Seitenplatten (2,3) eingesetzt werden, die an beiden Rändern des Rohrs vorhanden sind.

5. Rad mit veränderlichem Außendurchmesser nach einem der vorangehenden Ansprüche, wobei die Gleitkörper (10) des weiteren umfassen:
kreisbogenförmige Teile (10B), die die Randumfangsteile mit einem vorgegebenen Winkel bilden; und
Halteschafte (10A), die in die Durchgangslöcher (12) gepaßt sind.

6. Rad mit veränderlichem Außendurchmesser nach einem der vorangehenden Ansprüche, wobei entweder Gummi- oder Kunststoffmaterial an den Radumfangsteilen vorhanden ist.

7. Rad mit veränderlichem Außendurchmesser nach Anspruch 5 oder 6, wobei die Radumfangsteile des weiteren einen Nagelstift umfassen.

8. Fahrzeug, das Räder mit veränderlichen Außendurchmesser nach einem der vorangehenden Ansprüche umfaßt.

## Revendications

1. Roue à diamètre extérieur variable, comprenant :
une partie de support (1) ayant une partie creuse d'alimentation de fluide et une pluralité de trous de pénétration (12) radialement sur les parois latérales de ladite partie de support et connectés à ladite partie creuse d'alimentation de fluide ; et
le même nombre de coulisseaux (10) que lesdits trous de pénétration (12) qui sont engagés dans lesdits trous de pénétration afin d'être capables de coulisser dans lesdits trous de pénétration et de former des parties périphériques de roue ; et
dans laquelle lesdits coulisseaux (10) sont agencés de manière à être poussés par le fluide alimenté dans ladite partie creuse d'alimentation de fluide dans la direction telle que le diamètre extérieur de ladite roue à diamètre extérieur variable augmente.

2. Roue à diamètre extérieur variable selon l'une ou l'autre des revendications 1 et 2, comprenant en outre soit un pneu possédant un tube en caoutchouc (105), attaché autour de la face cylindrique de ladite partie de support.

3. Roue à diamètre extérieur variable selon la revendication 1, comprenant en outre :
des diaphragmes (9A) en face desdits trous de pénétration ;
dans laquelle lesdits coulisseaux (10) sont agencés de manière à être déplacés en étant poussés par desdits diapbragmes (9A) sous l'action dudit fluide alimenté à l'intérieur de ladite partie de support (1) dans la direction telle que le diamètre extérieur de ladite roue à diamètre extérieur variable augmente.

4. Roue à diamètre extérieur variable selon la revendication 3, comprenant en outre :
des parties de scellement (9) qui comprennent lesdits diaphragmes (9A) ;
dans laquelle lesdites parties de scellement (9) et ledit tube (1) sont combinés d'une manière étanche à l'air en les plaçant entre des plaques latérales (2, 3) prévues des deux côtés dudit tube.

5. Roue à diamètre extérieur variable selon l'une quelconque des revendications précédentes, dans laquelle lesdits coulisseaux (10) comprennent en outre :
des parties en forme d'arc (10B) qui forment lesdites parties périphériques de roue avec un angle désiré ; et
des arbres de support (10A) engagés dans lesdits trous de pénétration (12).

6. Roue à diamètre extérieur variable selon l'une quelconque des revendications précédentes, dans laquelle on prévoit du caoutchouc ou de la matière plastique sur lesdites parties périphériques de roue.

7. Roue à diamètre extérieur variable selon l'une ou l'autre des revendications 5 et 6, dans laquelle lesdites parties périphériques de roue comprennent en outre une tige formant clou.

8. Véhicule comprenant des roues à diamètre extérieur variable selon l'une quelconque des revendications précédentes.
